# EUROPÄISCHE PATENTANMELDUNG

(11) **EP 0 580 044 A2**
(43) Veröffentlichungstag der Anmeldung: **26.01.1994**
(21) Anmeldenummer: 93111060.5
(22) Anmeldetag: 10.07.1993
(51) Int. Cl.: H04L 12/28, G02B 26/02, G02B 6/42

(54) **Anschlussvorrichtung für die Gebäudesystemtechnik**

(30) Priorität: 18.07.1992 DE 4223731
(71) Anmelder: GEBRÜDER MERTEN GMBH & CO. KG, D-51643 Gummersbach (DE)
(72) Erfinder: Bothe, Robert, D-5216 Niederkassel (DE)
(74) Vertreter: Selting, Günther, Dipl.-Ing.

(57) **Zusammenfassung**

Die Anschlußeinrichtung enthält eine an eine Datenleitung (11) anschließbare Busankopplungseinheit (BA), die einen Mikroprozessor enthält und über interne Kommunikationsleitungen (12) mit einer Anschlußeinheit (AU) verbunden ist. Die Anschlußeinheit ist über Lichtleitkabel (18) mit mehreren Stellgliedern (13) verbunden, die keine elektrischen Komponenten enthalten und ein Stellorgan (22,23) aufweisen, das in einer ersten Stellung den Lichtweg von einer Lichtquelle zu einem Lichtempfänger durchlässig macht und in einer zweiten Stellung diesen Lichtweg unterbricht.

## Beschreibung

Die Erfindung betrifft eine Anschlußvorrichtung für Gebäudesystemtechnik. Eine derartige Anschlußvorrichtung ist z.B. bekannt aus EP 0 452 658 A1.

Bei Signalübertragungssystemen für die Gebäudesystemtechnik werden Datentelegramme zwischen verschiedenen im Gebäude installierten Anschlußeinheiten oder zwischen jeder Anschlußeinheit und einer Zentraleinheit übertragen werden können. Die Datenübertragung erfolgt zum Zwecke des Schaltens, Steuerns, Regelns, Messens und/oder Überwachens, wobei die Anschlußeinheiten die Funktion von Eingabe- und/oder Ausgabeeinheiten haben können. An die Anschlußeinheiten können externe elektrische Geräte, Melder oder Funktionsgeber angeschlossen werden. Die Anschlußeinheit ermöglicht die Kommunikation des externen Geräts mit dem Hausleitsystem. Jede Anschlußeinheit kommuniziert mit dem im Gebäude verlegten Datenbus über eine Busankopplungseinheit. Während die Busankopplungseinheiten untereinander gleich aufgebaut sind, variieren die Anschlußeinheiten in Abhängigkeit von dem Typ des externen Geräts, das angeschlossen werden soll. Bei der bekannten Anschlußeinrichtung ist eine einzige Busankopplungseinheit für mehrere Anschlußeinheiten vorgesehen. Durch sämtliche Anschlußeinheiten sind Kommunikationsleitungen durchgeschleift, die zu der Busankopplungseinheit führen. Jede Anschlußeinheit ist selektiv mit bestimmten Kommunikationsleitungen verbunden, so daß jede Anschlußeinheit anhand der Kombination von Kommunikationsleitungen in der Busankopplungseinheit identifizierbar ist. Dieses System setzt voraus, daß die einer Busankopplungseinheit zugeordneten Anschlußeinheiten räumlich nahe beieinander angeordnet sind. Die Anschlußeinheiten enthalten zugleich das Stellglied, über das von außen ein Befehl eingegeben werden kann oder das z.B. ein angeschlossenes Gerät ein- und ausschaltet. Es ist daher erforderlich, daß die Stellglieder, mit denen externe Funktionen ausgeführt werden, und die Stellglieder, über die extern Befehle in das Hausleitsystem eingegeben werden, in der Nähe einer Busankopplungseinheit angeordnet sind. Ferner wird dadurch, daß für jedes Stellglied eine eigene Anschlußeinheit erforderlich ist, das System aufwendig und teuer.

Aus DE 32 03 932 A1 ist ein Schalter für Lichtleiter bekannt, bei dem zwei in gegenseitiger Verlängerung angeordnete Lichtleiter durch ein Betätigungselement so gegeneinander versetzt werden können, daß der Lichtweg von einer Lichtquelle zu einem Lichtempfänger unterbrochen und dadurch ein Schaltvorgang ausgeführt wird. Ferner ist aus DE 88 00 075 U1 eine ebenfalls mit Lichtleitern arbeitende Vorrichtung zum optischen Erfassen des Schaltzustandes eines Schaltgliedes bekannt, wobei am Ende eines Lichtleiters ein bewegbarer Spiegel angeordnet ist, der in einer bestimmten Arbeitsposition das von einer Lichtquelle kommende Licht reflektiert und durch den Lichtleiter hindurch auf einen Lichtdetektor wirft. Auf diese Weise kann die Stellung des Spiegels überwacht werden. Diese mit Lichtleitern arbeitenden Überwachungseinrichtungen für den Schaltzustand eines Schaltgliedes dienen generell der Datenübertragung mit Lichtsignalen unter Vermeidung elektrischer Übertragungsleitungen.

Der Erfindung liegt die Aufgabe zugrunde, eine Anschlußleitung für die Gebäudesystemtechnik der im Oberbegriff des Patentanspruchs 1 angegebenen Art im Hinblick auf eine bessere Ausnutzung der Anschlußeinheit und eine Vereinfachung des Hausleitsystems weiterzubilden.

Die Lösung dieser Aufgabe erfolgt erfindungsgemäß mit den im Patentanspruch 1 angegebenen Merkmalen.

Bei der erfindungsgemäßen Anschlußeinrichtung enthält die Anschlußeinheit mehrere Lichtleiter-Anschlußvorrichtungen, von denen Lichtleitkabel zu einzelnen verteilt angeordneten Stellgliedern führen. Jede der Anschlußeinheiten ist also mit mindestens zwei Stellgliedern verbunden und sie hat eine der Anzahl der möglichen Stellglieder entsprechende Zahl von Eingängen. Dies bedeutet, daß eine einzige Anschlußeinheit die Schaltzustände mehrerer Stellglieder erfassen und an die Busankopplungseinheit liefern kann. Infolge der Verbindungstechnik mit Lichtleitkabeln können die Stellglieder entfernt von der Anschlußeinheit und auch entfernt voneinander angeordnet sein. Durch die Erfindung wird die Zahl der in einem Hausleitsystem benötigten Anschlußeinheiten verringert. Ein besonderer Vorteil besteht darin, daß die Verbindung der Anschlußeinheit mit den Stellgliedern stromlos erfolgt, so daß die Stellglieder auch in explosionsgefährdeten Bereichen, Naßbereichen oder stark störbehafteten Bereichen eingesetzt werden können. Durch diese Verbindungstechnik wird die Montagezeit verkürzt, da lediglich das Lichtleitkabel in das Stellglied und die Busankopplungseinheit eingesteckt werden muß. Vorteilhaft ist ferner, daß die Funktion sichtbar ist, da die Lichtbeaufschlagung des Lichtleitkabels optisch erkannt werden kann. Hierzu können ggf. noch zusätzliche Lichtwellenleiter an Steckern u.dgl. vorhanden sein, die Licht im Lichtwellenleiter nach außen sichtbar machen. Ein weiterer Vorteil besteht darin, daß die Lichtleitkabel im selben Leerrohr wie Starkstromkabel verlegt werden können, da die Lichtleitfunktion durch elektrische oder elektromagnetische Felder nicht gestört wird.

Die Stellglieder können in größerem Abstand von z.B. 20 m von der Anschlußeinheit entfernt angeordnet werden. Die Anschlußeinheit bildet somit eine Art Zentrale für die Erfassung der Schaltstellungen verteilt angeordneter Stellglieder. Die einzelnen Lichtempfänger an der Anschlußeinheit können nacheinander oder simultan abgefragt werden. Es ist auch möglich, eine einzige Lichtquelle für mehrere Lichtleitkabel zu verwenden, die zu den einzelnen Stellgliedern führen. Die rücklaufenden Lichtleiter der Lichtkabel transportieren dann das von dem Stellorgan im Stellglied bewirkte Signal zu dem betreffenden Lichtempfänger, der diesem Stellglied zugeordnet ist. Durch Verwendung einer einzigen Lichtquelle wird der Aufwand zusätzlich verringert.

Die Abfrage der Stellglieder kann in Reflexionstechnik oder in Durchlaßtechnik erfolgen. In Reflexionstechnik ist das Stellglied mit einem Spiegel versehen oder verbunden, der das durch einen Lichtleiter hindurch von der Lichtquelle kommende Licht in einen anderen Lichtleiter reflektiert, der zu dem Lichtempfänger führt. Bei der Durchlaßtechnik sind zwei relativ zueinander ausgerichtete Enden von Lichtleitern vorgesehen, die relativ zueinander seitlich verschoben werden können oder zwischen die das Stellorgan bewegt wird, um den Lichtstrom zu unterbrechen.

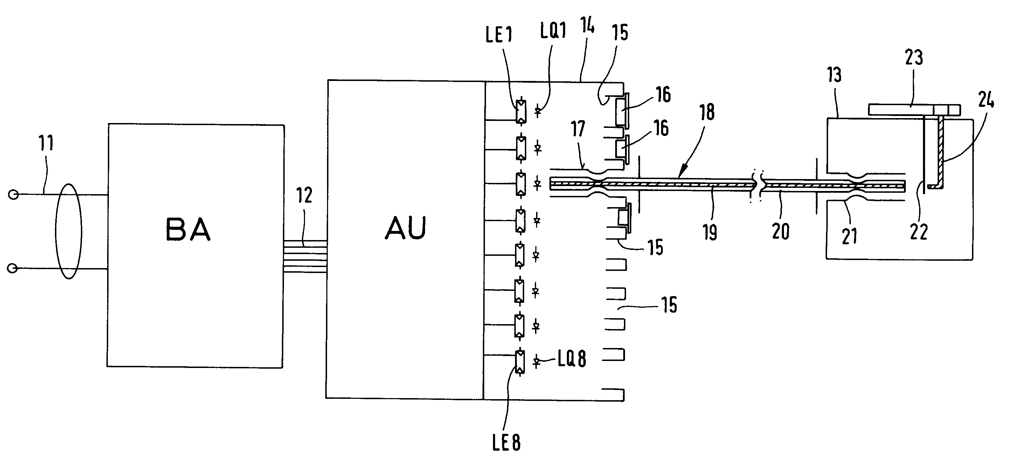

Im folgenden wird unter Bezugnahme auf die einzige Figur der Zeichnung ein Ausführungsbeispiel der Erfindung näher erläutert.

In der Zeichnung ist schematisch eine Anschlußeinrichtung eines Hausleitsystems dargestellt, die den Anschluß zahlreicher Stellglieder ermöglicht. Die Anschlußeinheit weist eine Busankopplungseinheit BA auf, die an einer Wand befestigt werden kann und vorzugsweise in einer üblichen Verteilerdose (Unterputz-Verteilerdose) enthalten ist. Die Busankopplungseinheit BA ist an eine Datenleitung 11 anschließbar, bei der es sich um einen Datenbus handeln kann, der zahlreiche Busankopplungseinheiten BA untereinander verbindet. Vorzugsweise ist die Datenleitung 11 durch die Busankopplungseinheit BA hindurchgeschleift, d.h. sie führt zu einer anderen (nicht dargestellten) Busankopplungseinheit weiter. Über die Datenleitung 11 werden Datentelegramme übertragen. Die Busankopplungseinheit BA enthält einen Mikroprozessor für den Austausch solcher Telegramme. Bei der Installation des Hausleitsystems in einem Gebäude ist es zunächst nur erforderlich, das Datenleitungsnetz zusammen mit den Busanschlußstellen BA zu installieren. An jede Busanschlußstelle BA wird dann eine Anschlußeinheit AU angesteckt, die hierbei mit der Busanschlußstelle über mehrere interne Kommunikationsleitungen 12 verbunden wird. Die Anschlußeinheiten AU sind anwendungsspezifisch und jeweils auf die durchzuführende Funktion abgestimmt. Die in der Zeichnung dargestellte Anschlußanheit AU dient zur Abfrage der Schaltzustände von Stellgliedern 13. Die Anschlußeinheit AU enthält ebenfalls einen Mikroprozessor und sie weist insgesamt acht Eingänge "1" bis "8" auf, die jeweils an einen Lichtempfänger LE1 ... LE8 angeschlossen sind. Diese Lichtempfänger sind lichtelektrische Wandler, z.B. Fototransistoren. Die Lichtempfänger sind in dem nach außen gekapselten lichtdichten Gehäuse 14 der Anschlußeinheit AU untergebracht. An diesem Gehäuse ist vor jedem Lichtempfänger eine Öffnung 15 vorgesehen, die im Anlieferzustand mit einem entfernbaren Blindstopfen 16 lichtdicht verschlossen ist.

Hinter jeder der Öffnungen 15 befindet sich im Gehäuse 14 eine Lichtleiter-Anschlußvorrichtung 17, in die ein Lichtleitkabel 18 eingesteckt werden kann, nachdem der Blindstopfen 16 entfernt wurde. Das Lichtleitkabel 18 enthält zwei gegeneinander abgeschirmte Lichtwellenleiter 19, von den in der Zeichnung nur einer sichtbar ist. Die Lichtwellenleiter 19 sind von einer lichtundurchlässigen Hülle 20 umgeben, die zugleich als Knickschutz wirkt.

Im Gehäuse 14 befindet sich ferner für jedes Lichtleitkabel 18 eine Lichtquelle LQ1 ... LQ8, beispielsweise eine lichtemittierende Diode (LED). Jede Lichtquelle LQ1 bis LQ8 ist mit dem Ende des zugehörigen einen Lichtwellenleiters des Lichtleiterkabels 18 gekapselt verbunden, so daß in das Ende des anderen Lichtwellenleiters kein Licht eintritt. Die Versorgung der Lichtquellen LQ1 bis LQ8 erfolgt durch die Anschlußeinheit AU.

Das andere Ende des Lichtleitkabels 18 ist in eine Anschlußeinheit 21 des Stellgliedes 13 lichtdicht eingesteckt, so daß die Enden der Lichtwellenleiter einem Spiegel 22 gegenüberliegen. Dieser Spiegel, der im lichtdichten Gehäuse des Stellgliedes 13 untergebracht ist, kann durch Bewegen eines Stellorgans 23 in Form einer Wippe in eine erste Stellung gebracht werden, in der er das aus dem einen Lichtwellenleiter austretende Licht in den anderen Lichtwellenleiter reflektiert, und in eine zweite Stellung, in der er den Lichtweg zwischen den beiden Lichtleitkabeln unterbricht.

Ferner ist hinter dem Spiegel 22 ein weiter Lichtwellenleiter 24 angeordnet, der aus dem Gehäuse herausführt und an dem von außen erkennbar ist, ob Licht durch das Lichtleitkabel 18 im Gehäuse 13 ankommt.

Das Stellorgan 23, das bistabiles Verhalten hat, kann nach Art eines Schalters den einen oder anderen Zustand bewegt werden, wodurch der Spiegel 22 entweder in die eine oder in die andere Stellung gebracht wird. Die aktive Stellung des Spiegels 22 hat zur Folge, daß der Lichtempfänger, der am Ende des Lichtleitkabels 18 angeordnet ist, mit von der Lichtquelle ausgesandtem und vom dem Spiegel 22 reflektiertem Licht beaufschlagt wird und entsprechendes Signal an den zugehörigen Eingang der Anschlußeinheit AU liefert. In der inaktiven Stellung des Spiegels 22 ist der Lichtweg von der Lichtquelle zum Lichtempfänger unterbrochen, so daß kein Signal am entsprechenden Eingang der Anschlußeinheit AU ansteht.

Bei dem vorliegenden Ausführungsbeispiel können an die Anschlußeinheit AU insgesamt acht Stellglieder 13 angeschlossen werden. Anstelle der acht Lichtquellen LQ1 bis LQ8 kann auch eine einzige Lichtquelle vorgesehen sein, deren Licht auf die einzelnen Lichtleitkabel 18 verteilt wird.

In Modifizierung des beschriebenen Ausführungsbeispiels kann auch ein Lichtleitkabel 18 verwendet werden, das ein Bündel aus zahlreichen lichtleitenden Einzeladern enthält. Das Bündel wird in der Anschlußeinheit AU aufgespleißt, so daß ein Teil der Adern der Einwirkung einer Lichtquelle ausgesetzt wird, während der andere Teil auf den zugehörigen Lichtempfänger gerichtet ist. Das in dem Stellglied 13 aus dem einen Teil der Adern austretende Licht wird in die auf den Lichtempfänger gerichteten Einzeladern hineinreflektiert.

Ferner ist es möglich, die Lichtquelle bzw. die Lichtquellen im Impulsbetrieb zu betreiben, wobei höhere Stromstärken möglich sind und eine höhere Lichtausbeute erreicht wird.

## Patentansprüche

1. Anschlußeinrichtung für die Gebäudesystemtechnik, mit einer mit einem Datenkabel (11) verbindbaren Busankopplungseinheit (BA), die einen Mikroprozessor enthält, und einer von außen beeinflußbaren funktionsspezifischen Anschlußeinheit (AU), die über interne Kommunikationsleitungen (12) mit der Busankopplungseinheit (BA) verbunden ist,
**dadurch gekennzeichnet,**
daß die Anschlußeinheit (AU) mehrere Lichtleiter-Anschlußvorrichtungen (17) mit einer Lichtquelle (LQ1-LQ8) und jeweils einem Lichtempfänger (LE1-LE8) aufweist und daß jede der Anschlußvorrichtungen (17) über ein eigenes Lichtleitkabel (18) mit einem Stellglied (13) verbindbar ist, das ein bewegbares Stellorgan (22,23) enthält, welches in einer ersten Stellung den Lichtweg von der Lichtquelle zum Lichtempfänger durchlässig macht und in einer zweiten Stellung diesen Lichtweg unterbricht.

2. Anschlußeinrichtung nach Anspruch 1, dadurch gekennzeichnet, daß jedes Lichtleitkabel (18) mindestens zwei Lichtleiter (19) enthält, von denen mindestens einer mit der Lichtquelle (LQ) und mindestens ein anderer mit dem Lichtempfänger (LE) gekoppelt ist.

3. Anschlußeinrichtung nach Anspruch 1 oder 2, dadurch gekennzeichnet, daß die Anschlußeinheit (AU) mindestens vier Lichtleiter-Anschlußvorrichtungen (17) aufweist.

4. Anschlußeinrichtung nach einem der Ansprüche 1 bis 3, dadurch gekennzeichnet, daß die Anschlußeinheit (AU) in einem Gehäuse (14) enthalten ist, das für jede Lichtleiter-Anschlußvorrichtung (17) eine mit einem herausnehmbaren Blindstopfen (16) verschlossene Öffnung (15) aufweist.

5. Anschlußeinrichtung nach einem der Ansprüche 1 bis 4, dadurch gekennzeichnet, daß eine einzige Lichtquelle für mehrere Lichtleitkabel (18) vorgesehen ist.

6. Anschlußeinrichtung nach einem der Ansprüche 1 bis 5, dadurch gekennzeichnet, daß die Lichtquelle im Impulsbetrieb betrieben ist.
